# EUROPÄISCHE PATENTSCHRIFT

(11) **EP 1 463 986 B1**
(45) Veröffentlichungstag und Bekanntmachung des Hinweises auf die Patenterteilung: **08.02.2012**
(21) Anmeldenummer: 02785046.0
(22) Anmeldetag: 19.10.2002
(51) Int. Cl.: G01C 21/36, G06F 3/048

(54) **VERFAHREN ZUM DARSTELLEN EINER HIERARCHISCH STRUKTURIERTEN LISTE UND ZUGEHÖRIGE ANZEIGEEINHEIT**
METHOD FOR DISPLAYING A HIERARCHICALLY STRUCTURED LIST AND A CORRESPONDING DISPLAY UNIT
PROCEDE DE REPRESENTATION D'UNE LISTE A STRUCTURE HIERARCHIQUE ET UNITE D'AFFICHAGE CORRESPONDANTE

(30) Priorität: 07.12.2001 DE 10160261
(43) Veröffentlichungstag der Anmeldung: 06.10.2004
(73) Patentinhaber: ROBERT BOSCH GMBH, 70442 Stuttgart (DE)
(72) Erfinder: MUELLER, Guido, 06484 Quedlinburg (DE)
(86) Internationale Anmeldenummer: PCT/DE2002/003950
(87) Internationale Veröffentlichungsnummer: WO 2003/050420

(56) Entgegenhaltungen:
- US-A- 5 812 135
- US-A- 5 923 328
- US-A- 5 953 017
- US-B1- 6 448 985
- INTERNATIONAL BUSINESS MACHINES CORPORATION: "Tree navigator - a concept for navigation in big trees" RESEARCH DISCLOSURE, KENNETH MASON PUBLICATIONS, HAMPSHIRE, GB, Bd. 448, Nr. 109, August 2001 (2001-08), XP007128784 ISSN: 0374-4353

## Beschreibung

### Technisches Gebiet

Die vorliegende Erfindung betrifft ein Verfahren zum Darstellen mindestens einer hierarchisch strukturierten, zumindest zweistufigen Liste, aufweisend
- mindestens eine Hierarchiestufe übergeordneter Einträge oder Elemente und
- mindestens eine Hierarchiestufe untergeordneter Einträge oder Elemente,
- wobei mindestens ein untergeordnetes Element jeweils mindestens einem übergeordneten Element zugeordnet wird.

Die vorliegende Erfindung betrifft des weiteren eine auf ein derartiges Verfahren bezogene Anzeigeeinheit.

### Stand der Technik

Die Problematik des Anzeigens oder Darstellens langer, hierarchisch strukturierter Listen findet sich heutzutage auf vielen technischen Gebieten, so etwa beim Anzeigen von hierarchisch strukturierten Listen auf dem Anzeigeelement eines Computersystems oder auf einem Navigationsdisplay, und soll nachstehend an eben diesem Beispiel von Navigationssystemen aufgezeigt werden.

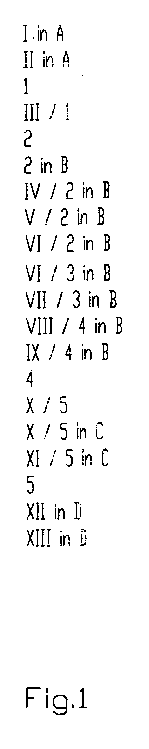

So wird bei einem Navigationssystem zum Darstellen des Ergebnisses einer Routensuche eine Liste von Namen der zur Route gehörenden Straßen erzeugt; die Einträge beinhalten zumeist neben dem eigentlichen Straßennamen (= römische Ziffer in Figur 1) auch eine eventuell vorhandene Straßennummer (= arabische Ziffer in Figur 1) sowie die Ortschaft (= Großbuchstabe in Figur 1), zu dem diese Straße gehört (vgl. Figur 1).

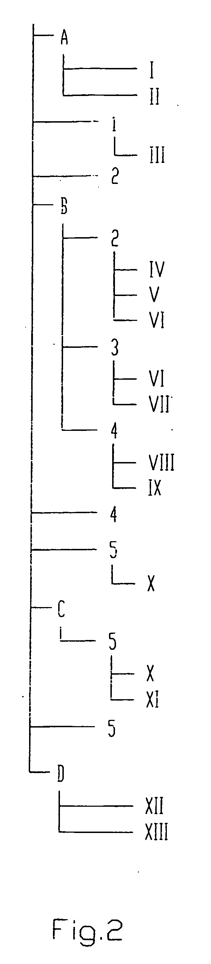

Die in Figur 1 gezeigte sogenannte "flache" oder hierarchielose Darstellung wird in dieser Form nur in den seltensten Fällen eingesetzt, weil sie im Regelfall unpraktikabel und nicht übersichtlich ist. Für eine höhere Praktikabilität sowie für eine bessere Übersichtlichkeit werden Einträge und Elemente, die einer bestimmten Ortschaft (= Großbuchstabe in den Figuren 1 und 2) oder einer bestimmten Straßennummer (= arabische Ziffer in den Figuren 1 und 2) zugeordnet sind, zusammengefaßt und hierarchisch angezeigt, so wie dies anhand Figur 2 veranschaulicht ist.

Diese anhand Figur 2 exemplifizierte Form der Baumdarstellung bietet dem Nutzer eine höhere Praktikabilität sowie eine bessere Übersichtlichkeit, denn die verschiedenen Einträge und Elemente werden entsprechend ihrer Bedeutung gewichtet angezeigt; hierbei besteht auch die Möglichkeit, die entstandenen Teillisten, die nachfolgend auch als "untergeordnete Listen" oder als "Unterlisten" bezeichnet werden, zusammenzufassen und lediglich durch den übergeordneten Eintrag oder durch das übergeordnete Element darzustellen.

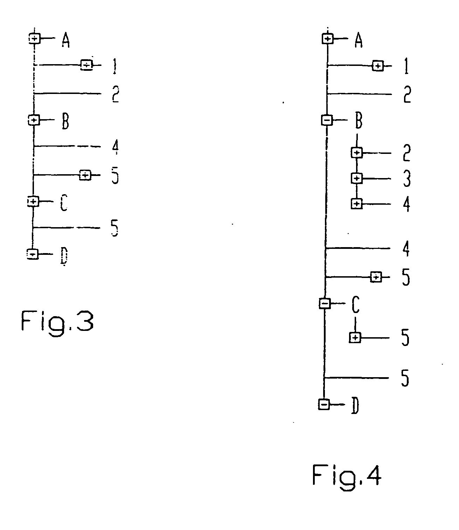

Auf diese Weise lassen sich beispielsweise die Straßen innerhalb von Ortschaften verbergen, so daß die Routenliste als eine Ortsliste mit Überlandverbindungen erscheint (vgl. Figur 3). Eine derartige Darstellung ist beispielsweise für sehr lange Überlandfahrten praktisch, bei denen es auf die einzelnen Straßen in den Ortschaften im Regelfall gar nicht ankommt.

Zum Abbilden einer bestehenden Expansionsmöglichkeit eines verborgenen Zweigs der hierarchisch strukturierten Liste hat sich ein Quadrat mit einem "Plus"-Symbol eingebürgert; dementsprechend wird ein Quadrat mit einem "Minus"-Symbol für die bestehende Möglichkeit angezeigt, eine untergeordnete Liste oder Unterliste zusammenklappen zu können. Ein Beispiel hierfür ist die Routenliste mit der Darstellung sämtlicher Ortschaften und Straßen mit Straßennummem, wie sie in Figur 4 gezeigt ist.

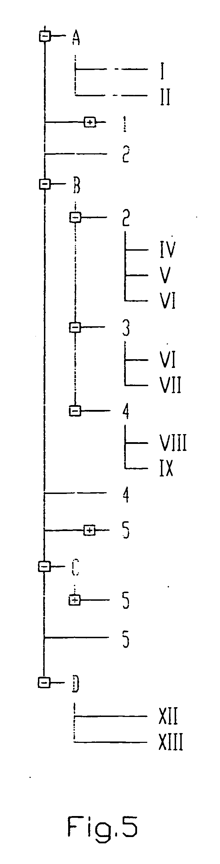

Neben diesen verschieden voreingestellten Listen, in denen nur bestimmte Teile dargestellt oder auch verborgen werden, sind auch andere Konstellationen denkbar: So können nach der Interaktion des Nutzers einige Teillisten expandiert und andere wiederum zusammengefaßt sein (vgl. Figur 5).

Die Möglichkeit des Zusammenfassens oder "Zusammenklappens" von Unterlisten oder auch des Expandierens dieser Unterlisten soll dem Nutzer helfen, eine bessere Übersicht über die angebotenen Informationen zu erhalten. Dies ist insofern von großer Bedeutung, als die Anzeigemöglichkeiten beispielsweise aufgrund eines kleinen Displays bei Navigationsgeräten für Fortbewegungsmittel beschränkt sind. So bieten einige gebräuchliche, auch für Fortbewegungsmittel der Oberklasse bestimmte Navigationsgeräte lediglich sechs Zeilen zum Darstellen der Straßennamensliste.

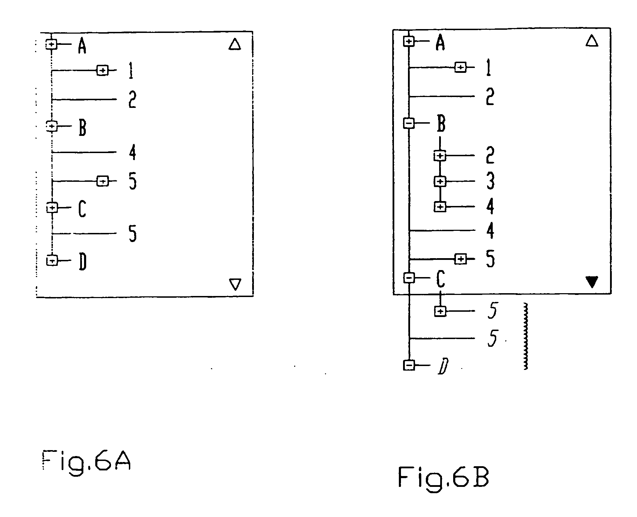

Geht man einmal exemplarisch von einer Anzeige mit zehn Zeilen aus, so ist die hierarchisch strukturierte Liste in den Figuren 6A und 6B mit dem entsprechenden Anzeigefenster dargestellt. Die in den Figuren 6A und 6B stärker gedruckten Einträge und Elemente erscheinen hierbei im Anzeigefenster, wohingegen die in den Figuren 6A und 6B schwächer gedruckten, sich außerhalb des Anzeigefensters befindlichen Einträge und Elemente lediglich zum besseren Verständnis der Zusammenhänge dienen, jedoch nicht für den Nutzer sichtbar im Anzeigefenster aufscheinen.

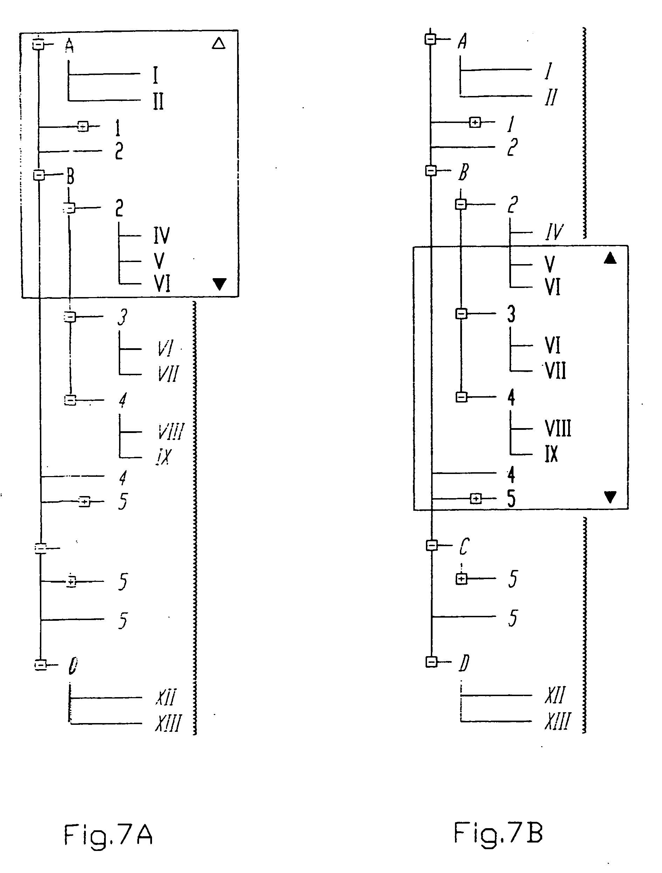

Wie exemplarisch dem Vergleich der Figuren 7A und 7B entnehmbar ist, ergibt sich jedoch für hierarchisch strukturierte Listen insofern ein neues Problem, als sich für bestimmte Bereiche keine direkte Zuordnung des Straßennamens zur Straßennummer oder zur Ortschaft bzw. keine direkte Zuordnung der Straßennummer zur Ortschaft ermitteln läßt; dieser Effekt tritt insbesondere mitten in langen untergeordneten Listen auf.

Der Nutzer hat in diesem Falle nur die Möglichkeit, durch Blättern in der hierarchisch strukturierten Liste die gesuchten Informationen zu erhalten. Bei sehr langen Listen ist dieser Vorgang ungünstig und nicht praktikabel, weil beim Blättern der eigentlich interessierende Eintrag bzw. das eigentlich interessierende Element aus dem Blickfeld verloren gehen kann; nur in relativ seltenen Fällen besteht also die Chance, die relevanten Einträge und Elemente gleichzeitig sehen zu können. So kann etwa im Beispiel der Figur 7B nicht unmittelbar erkannt werden, daß der Straßenname IX zur Ortschaft B gehört. Eine direkte Zuordnung ist mithin nicht immer möglich, was angesichts des damit verbundenen Informationsverlustes als unbefriedigend empfunden wird.

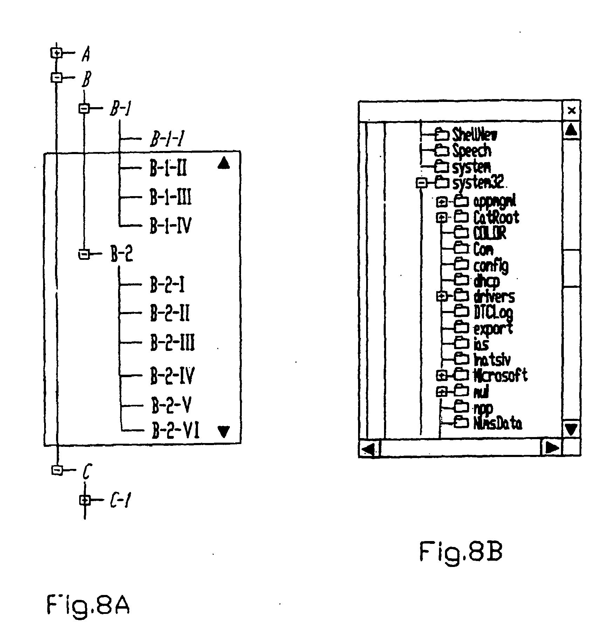

Von diesem Problem ist generell die Darstellung hierarchisch strukturierter Listen betroffen, wenn diese nicht vollständig im Anzeigemedium dargestellt werden können (meistens können hierarchisch strukturierte Listen nicht vollständig im Anzeigemedium dargestellt werden; vgl. Figur 8A).

Der in der Computertechnik wohl bekannteste Fall ergibt sich in der Darstellung von so genannten "Dateimanagern", wie beispielsweise im Falle des so genannten "Explorers" des Betriebssystems "Windows®" der Firma "Microsoft®". Bei derartigen Anwendungen hat der Nutzer in einigen Fällen beispielsweise keine Möglichkeit zu erkennen, wie das übergeordnete Verzeichnis oder gar die übergeordneten Verzeichnisse der aktuell im Anzeigefenster dargestellten Dateien oder Verzeichnisse lauten (vgl. Figur 8B).

Die US 5,812,135 zeigt eine Baumdarstellung nach dem Oberbegriff der neuen Ansprüche 1 und 7. Zu untergeordneten Elementen werden jeweils auch die übergeordneten Elemente dargestellt. Die US 5,953,017 zeigt ebenfalls eine Baumdarstellung für einen Rechner. Werden übergeordnete Elemente und Unterlisten ausgeblendet, wird dies durch ein entsprechendes Symbol in der Baumdarstellung angezeigt. Die XP007128784 zeigt ein Baumnavigationssystem, bei dem neben einer detaillierten Baumdarstellung eine zweite Baumdarstellung in der Anzeige ausgegeben wird. In dieser Baumdarstellung sind Unterknoten und abhängige Elemente von höher geordneten Elementen ausgeblendet.Die US 5,923,328 zeigt neben einer Baumdarstellung eine weitere Anzeige in der Weise vorzusehen, dass neben dem Unterelement das übergeordnete Element als Karteiraider dargestellt wird.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein Verfahren der eingangs genannten Art sowie eine auf ein derartiges Verfahren bezogene Anzeigeeinheit so weiterzubilden, dass dem Nutzer bei der Darstellung von hierarchisch strukturierten, zumindest zweistufigen Listen eine optimale Übersicht geboten wird.

In diesem Zusammenhang soll insbesondere die Problematik der Anzeige auf Anzeigeeinheiten oder Displays mit eingeschränkter Zeilenanzahl Berücksichtigung finden. Im Unterschied zu der anhand der Figuren 8A und 8B veranschaulichten nachteiligen Situation soll der Nutzer durch die vorliegende Erfindung stets in die Lage versetzt werden, die in der hierarchisch strukturierten Liste aufgeführten Einträge und Elemente den jeweiligen übergeordneten Einträgen und Elementen entsprechend zuordnen zu können.

Diese Aufgabe wird gemäß der Lehre der vorliegenden Erfindung durch ein Verfahren mit den im Anspruch 1 genannten Merkmalen sowie durch eine Anzeigeeinheit mit den im Anspruch 7 genannten Merkmalen gelöst. Vorteilhafte Ausgestaltungen und zweckmäßige Weiterbildungen der vorliegenden Erfindung sind in den jeweiligen Unteransprüchen gekennzeichnet.

Die vorliegende Erfindung zeichnet sich insbesondere dadurch aus, dass für jedes angezeigte Element die zugehörigen übergeordneten Einträge - entsprechend einer oder mehreren höheren Hierarchiestufen - der hierarchisch strukturierten Liste sichtbar sind. Hierdurch wird der Nutzer in die Lage versetzt, auch in großen, hierarchisch strukturierten Listen, wie beispielsweise in der Routenliste eines Navigationssystems oder im Verzeichnisbaum des Dateimanagers eines Betriebssystems, stets den Überblick zu behalten.

In diesem Zusammenhang sind in zweckmäßiger Weise weder das vorliegende Verfahren noch die vorliegende Anzeigeeinheit auf eine bestimmte Anzahl von Hierarchiestufen beschränkt, sondern eignen sich auch für umfangreiche Applikationen mit einer Vielzahl von Hierarchiestufen und einem entsprechend hohen Informationsgehalt.

Erfindungsgemäß sind die Einträge und Elemente von untergeordneten Listen - entsprechend einer niedrigeren Hierarchiestufe -, auch wenn diese Listen nur partiell angezeigt werden, den übergeordneten Elementen stets eindeutig zuordbar. In diesem Zusammenhang wird der Nutzer der vorliegenden Erfindung insbesondere zu schätzen wissen, dass die den untergeordneten Listen übergeordneten Einträge und Elemente ohne zusätzliches Blättern oder Verschieben der hierarchisch strukturierten Liste immer sichtbar sind.

Bei der optimierten Darstellung von langen, hierarchisch strukturierten Listen soll im wesentlichen ein bestimmter wichtiger Bereich angezeigt werden; falls es sich hierbei um eine Liste mit untergeordneten Einträgen oder Elementen (auch untergeordnete Liste oder Unterliste genannt) handelt, sollen auch die zugehörigen übergeordneten Einträge oder Elemente angezeigt werden:

Um eine derartige optimierte Darstellung der untergeordneten Einträge oder Elemente simultan mit den übergeordneten Einträgen oder Elementen zu ermöglichen, wird der Anzeigebereich gemäß einer besonders vorteilhaften Lehre der vorliegenden Erfindung in mindestens zwei gewissermaßen virtuelle (Anzeige-)Bereiche aufgeteilt, nämlich zum einen in den vorzugsweise oben angeordneten (Anzeige-)Bereich zum Anzeigen der übergeordneten Einträge oder Elemente (= sogenannter "übergeordneter Anzeigebereich"), zum anderen in den vorzugsweise unten angeordneten (Anzeige-)Bereich zum Anzeigen der Unterlisten selbst, das heißt zum Anzeigen der Einträge oder Elemente der Unterlisten (= sogenannter "untergeordneter Anzeigebereich").

Was nun den Aufbau der Anzeige oder der Darstellung der hierarchisch strukturierten Liste anbelangt, so sind die anzuzeigenden Einträge oder Elemente gemäß einer vorteilhaften Ausgestaltungsform der vorliegenden Erfindung zunächst in Anzeigelisten aufzunehmen, bevor diese Einträge oder Elemente dann in der Anzeige dargestellt werden. Die Anzeigeliste der untergeordneten Einträge oder Elemente (= Liste der Einträge oder Elemente der Unterliste oder des untergeordneten Anzeigebereichs) sollte hierbei zweckmäßigerweise ausgehend vom letzten darzustellenden Eintrag oder Element aufgebaut werden, um die erforderlichen übergeordneten Einträge oder Elemente bestimmen zu können.

In bevorzugter Weise werden für jeden aufgenommenen Eintrag oder für jedes aufgenommene Element der Unterliste die übergeordneten Einträge oder Elemente in die Anzeigeliste der übergeordneten Einträge oder Elemente (= Liste der Einträge oder Elemente des übergeordneten Anzeigebereichs) aufgenommen. Falls in der Anzeigeliste der untergeordneten Einträge oder Elemente ein Element eingetragen ist, das bereits in der Anzeigeliste der übergeordneten Einträge oder Elemente enthalten ist, so ist dieses Element aus der Anzeigeliste der übergeordneten Einträge oder Elemente zweckmäßigerweise zu löschen.

In einer bevorzugten Weiterbildung der vorliegenden Erfindung werden beide Listen, das heißt sowohl die Anzeigeliste der übergeordneten Einträge oder Elemente als auch die Anzeigeliste der untergeordneten Einträge oder Elemente solange mit Einträgen oder Elementen gefüllt, wie die Summe der Einträge oder Elemente beider Listen kleiner als die oder maximal gleich der Anzahl der nutzbaren Zeilen ist.

Nachdem sowohl die Anzeigeliste der übergeordneten Einträge oder Elemente als auch die Anzeigeliste der untergeordneten Einträge oder Elemente entsprechend gefüllt sind, werden diese zweckmäßigerweise nach gewohnten Mustern nacheinander in die Anzeigeeinheit gemäß der vorliegenden Erfindung geschrieben. Für die Darstellung des Teils der übergeordneten Einträge oder Elemente ergibt sich hierbei eine Besonderheit, wenn das nächste anzuzeigende Element nicht das folgende Element der ursprünglichen Liste ist; in diesem Falle hat eine Kennzeichnung für die ausgeblendeten Einträge oder Elemente zu erfolgen. Nach dem Ausgeben der übergeordneten Einträge oder Elemente wird die Anzeigeliste der untergeordneten Einträge oder Elemente ausgegeben.

Wenn die vorliegende Erfindung in besonders vorteilhafter Weise weitergebildet werden soll, so wird zwischen dem übergeordneten (Anzeige-)Bereich und dem untergeordneten (Anzeige-)Bereich mindestens ein Trennelement, insbesondere mindestens eine Trennlinie, vorgesehen. Die Position dieses Trennelements ist nicht statisch, sondern ergibt sich vielmehr durch die Anforderungen des oberen, durch die übergeordneten Einträge oder Elemente gegebenen Anzeigebereichs.

Dies bedeutet, daß das Trennelement derart verschoben werden kann, daß im übergeordneten Anzeigebereich sämtliche den untergeordneten Elementen zugeordneten übergeordneten Elemente dargestellt werden können, das heißt daß im oberen Anzeigebereich sämtliche übergeordneten Einträge oder Elemente zur bzw. zu den anzuzeigenden Unterliste(n) dargestellt werden können.

In diesem Zusammenhang sollte beachtet werden, daß für die Einträge oder Elemente der übergeordneten Liste zusätzlicher Anzeigeraum für die Unterscheidung und/oder für die Trennung von den Unterlisten notwendig ist; nimmt das Trennelement in einer vorteilhaften Ausgestaltungsform als Trennlinie beispielsweise eine Zeile ein, so können sowohl die Anzeigeliste der übergeordneten Einträge oder Elemente als auch die Anzeigeliste der untergeordneten Einträge oder Elemente lediglich solange mit Einträgen oder Elementen gefüllt werden, wie die Summe der Einträge oder Elemente beider Listen kleiner, und zwar im Regelfall um Eins kleiner, als die Anzahl der nutzbaren Zeilen ist.

Der Fachmann auf dem Gebiet des Darstellens hierarchisch strukturierter Listen wird in bezug auf die vorliegende Erfindung auch deren sehr gute Nachweisbarkeit zu schätzen wissen, die insofern vorliegt, als eine wesentliche und notwendige Bedingung existiert, die beim Einsatz des hier beschriebenen Verfahrens wie auch der hier beschriebenen Anzeigeeinheit erfüllt sein muß:

Bei der optimierten Darstellung von beliebig langen, hierarchisch strukturierten Listen ist gemäß der Lehre der vorliegenden Erfindung zu jedem Zeitpunkt für die angezeigten Teillisten, die auch als "untergeordnete Listen" oder als "Unterlisten" bezeichnet werden, der bzw. das mindestens eine entsprechende übergeordnete Eintrag bzw. Element sichtbar. In diesem Zusammenhang ist es eine erfindungswesentliche Eigenschaft des vorliegenden Verfahrens, daß Teile des Anfangs der "Unterliste(n)" ausgeblendet werden, um die übergeordneten Einträge bzw. Elemente darstellen zu können.

In einer besonders zweckmäßigen Ausgestaltungsform der vorliegenden Erfindung eignet sich das Verfahren wie auch die vorliegende Anzeigeeinheit insbesondere zum Darstellen von hierarchisch strukturierten Listen auf einem kleinen Anzeigemedium, wie etwa auf dem Display eines Mobiltelephons oder auf der Anzeigeeinheit eines im Armaturenbrett eines Fortbewegungsmittels integrierten Navigationssystems. In jedem Falle läßt sich das vorliegende Verfahren nicht nur für die Darstellung von hierarchisch strukturierten Listen, wie etwa der Straßennamensliste in Navigationssystemen, nutzen, sondern kann auch für die Darstellung ähnlich gelagerter Problemfälle angewendet werden.

Die vorliegende Erfindung betrifft schließlich die Verwendung des vorstehend dargelegten Verfahrens beim Darstellen der Einträge und/oder der Elemente mindestens einer insbesondere softwarebasierten Routensuch-Applikation eines Navigationssystems, insbesondere eines in einem Fortbewegungsmittel angeordneten Navigationssystems.

Alternativ oder in Ergänzung hierzu kann das vorstehend dargelegte Verfahren auch beim Darstellen der Einträge und/oder der Elemente mindestens eines Dateimanagers, insbesondere mindestens eines Anzeigefensters eines Dateimanagers, zum Einsatz gelangen.

### Kurze Beschreibung der Zeichnungen

Weitere Ausgestaltungen, Merkmale und Vorteile der vorliegenden Erfindung werden nachstehend anhand des durch die Figuren 9 bis 16B veranschaulichten Ausführungsbeispiels näher erläutert.

Es zeigt:
- Fig. 1: eine einfache, nicht hierarchisch strukturierte Straßennamensliste;
- Fig. 2: eine Straßennamensliste;
- Fig. 3: eine Ortsliste mit Überlandverbindungen;
- Fig. 4: eine Routenliste mit Ortsnamen und mit Straßennummern;
- Fig. 5: eine Straßennamensliste mit teilweise expandierten Unterlisten;
- Fig. 6A: eine Anzeige einer Ortsliste mit wichtigen Straßen im Display;
- Fig. 6B: die Anzeige aus Fig. 6A mit teilweise expandierten Unterlisten;
- Fig. 7A: eine Anzeige einer partiell expandierten Straßennamensliste im Display;
- Fig. 7B: die Anzeige aus Fig. 7A mit gegenüber Fig. 7A nach untem verschobenem Display;
- Fig. 8A: eine Unterliste ohne erkennbares übergeordnetes Element (= Problemfall);
- Fig. 8B: Unterverzeichnisse bei einem Dateimanager ohne erkennbare übergeordnete Verzeichnisse (= Problemfall);
- Fig. 9: die mittels eines Trennelements bewirkte Aufteilung des gesamten Anzeigebereichs in einen übergeordneten Anzeigebereich und in einen untergeordneten Anzeigebereich;
- Fig. 10: ein Ablaufdiagramm für den Vorgang des Ermittelns der anzuzeigenden Einträge und Elemente;
- Fig. 11: ein Ablaufdiagramm für den Vorgang des Darstellens der anzuzeigenden Einträge und Elemente;
- Fig. 12: den vollständigen Anfang einer Unterliste mit den übergeordneten Einträgen und Elementen in der noch nicht "geblätterten" Ausgangssituation (= kein Ausführungsbeispiel gemäß der vorliegenden Erfindung, sondern ein das Verständnis der vorliegenden Erfindung erleichterndes Beispiel aus dem Stand der Technik);
- Fig. 13A: die teilausgeblendete Unterliste aus Fig. 12 mit den übergeordneten Elementen nach dem ersten "Blättern nach unten";
- Fig. 13B: die teilausgeblendete Unterliste aus Fig. 13A, um ein weiteres Element nach unten geblättert;
- Fig. 14A: die teilausgeblendete Unterliste aus Fig. 12 mit den übergeordneten Elementen nach dem zweiten "Blättern nach unten";
- Fig. 14B: die teilausgeblendete Unterliste aus Fig. 14A mit für jedes Element der dargestellten Unterliste angezeigtem übergeordnetem Element;
- Fig. 15A die: teilausgeblendete Unterliste aus Fig. 12 mit den übergeordneten Elementen nach dem vierten "Blättern nach unten";
- Fig. 15B: die teilausgeblendete Unterliste aus Fig. 15A mit für jedes Element der dargestellten Unterliste angezeigtem übergeordnetem Element;
- Fig. 16A die: teilausgeblendete Unterliste aus Fig. 12 mit den übergeordneten Elementen nach dem fünften "Blättern nach unten";
- Fig. 16B: die teilausgeblendete Unterliste aus Fig. 16A mit für jedes Element der dargestellten Unterliste angezeigtem übergeordnetem Element;

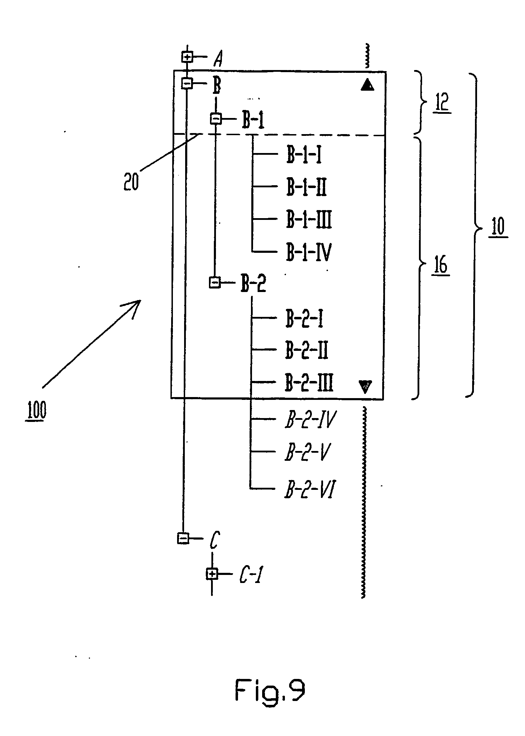

Gleiche oder ähnliche Ausgestaltungen, Elemente oder Merkmale sind in den Figuren 9 bis 16B mit identischen Bezugszeichen versehen.

### Bester Weg zur Ausführung der Erfindung

Im vorliegenden Ausführungsbeispiel eines Verfahrens zum Darstellen einer durch drei Hierarchiestufen strukturierten Liste wird beschrieben, auf welche Weise die eingangs geschilderten Nachteile beim Darstellen von hierarchisch strukturierten Listen mit langen sogenannten "Unterlisten" (= "untergeordnete Listen" = Listen mit untergeordneten Einträgen oder Elementen) aufgehoben werden. Hierbei wird gemäß der Lehre der vorliegenden Erfindung gewährleistet, daß die relevanten und einander zugeordneten, das heißt zueinander gehörigen Informationen gleichzeitig dargestellt werden.

Grundsätzlich soll beim Darstellen von langen, hierarchisch strukturierten Listen im wesentlichen ein bestimmter wichtiger Bereich angezeigt werden. Falls es sich hierbei um eine Unterliste handelt, sollen auch die zugehörigen übergeordneten Einträge und Elemente angezeigt werden. Um dieses zu ermöglichen, wird der Anzeigebereich 10 gemäß der Darstellung in Figur 9 in zwei virtuelle (Anzeige-)Bereiche 12, 16 aufgeteilt, nämlich zum einen in den sogenannten "übergeordneten Anzeigebereich" 12 zum Anzeigen der übergeordneten Einträge und Elemente und zum anderen in den für die Einträge und Elemente der Unterlisten selbst vorgesehenen "untergeordneten Anzeigebereich" 16.

Die Position eines zwischen dem übergeordneten Anzeigebereich 12 und dem untergeordneten Anzeigebereich 16 vorgesehenen Trennelements in Form einer Trennlinie 20 ist nicht fest oder statisch auf der Anzeigeeinheit 100, sondern ergibt sich vielmehr durch die Anforderungen des übergeordneten Anzeigebereichs 12, und zwar dergestalt, daß sämtlicheübergeordneten Einträge und Elemente zu den im untergeordneten Anzeigebereich 16 anzuzeigenden Unterlisten dargestellt werden können müssen (vgl. Figur 9).

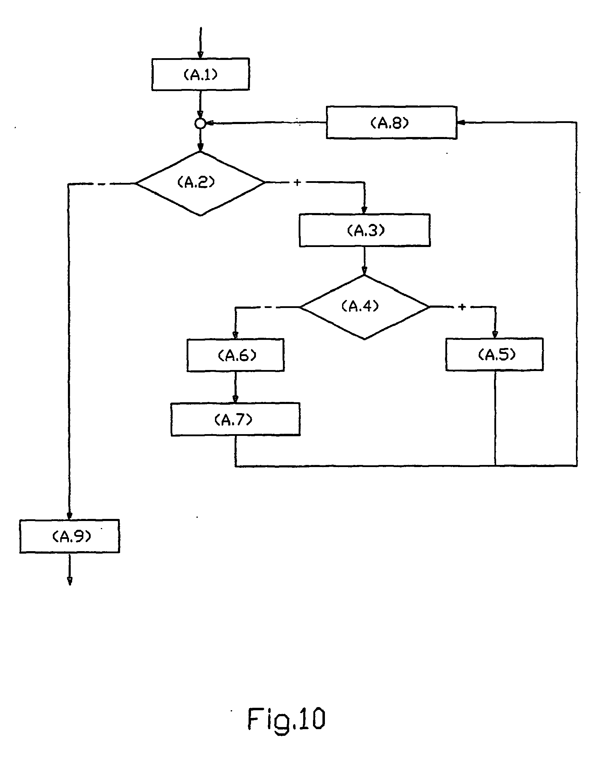

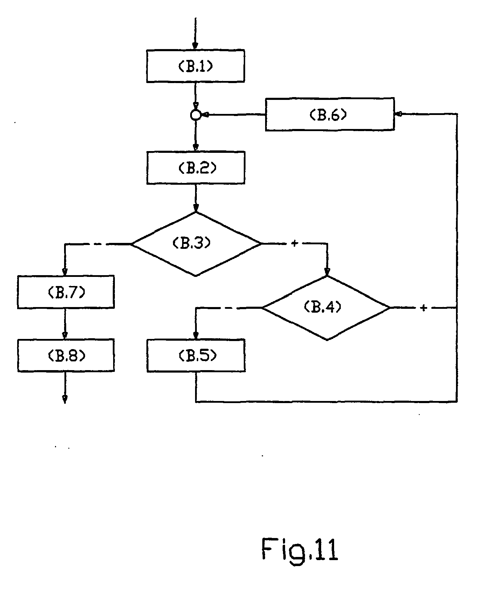

Was nun die algorithmischen Vorschriften zum Aufbau der Anzeige in der Anzeigeeinheit 100 anbelangt, so sind diese algorithmischen Vorschriften im wesentlichen durch zwei Verfahrensschritte geprägt, nämlich durch das Ermitteln der anzuzeigenden Elemente (-->Verfahrensschritte [A.1] bis [A.9] in Figur 10) und durch das Darstellen der anzuzeigenden Elemente (-->Verfahrensschritte [B.1] bis [B.8] in Figur 11):

Hierbei wird zunächst das aktuelle Element als letztes anzuzeigendes Element in der ursprünglichen Liste definiert (= Verfahrensschritt [A.1] in Figur 10). Daraufhin wird geprüft, ob sich ein weiteres Element in den untergeordneten Anzeigebereich 16 aufnehmen läßt (= Verfahrensschritt [A.2] in Figur 10); wenn dies nicht der Fall ist (= "-" in Figur 10), dann werden - durch die Trennlinie 20 gemäß Figur 9 ersichtlich getrennt - der übergeordnete Anzeigebereich 12 und der untergeordnete Anzeigebereich 16 in der Anzeigeeinheit 100 dargestellt (= Verfahrensschritt [A.9] in Figur 10).

Wenn sich hingegen ein weiteres Element in den untergeordneten Anzeigebereich 16 aufnehmen läßt (= "+" in Figur 10), dann wird dieses weitere Element als aktuelles Element in den untergeordneten Anzeigebereich 16 aufgenommen (= Verfahrensschritt [A.3] in Figur 10). Im Anschluß daran wird überprüft, ob das aktuelle Element auch im übergeordneten Anzeigebereich 12 enthalten ist (= Verfahrensschritt [A.4] in Figur 10); falls dies der Fall ist (= "+" in Figur 10), dann wird das aktuelle Element aus dem übergeordneten Anzeigebereich 12 gelöscht (= Verfahrensschritt [A.5] in Figur 10).

Falls hingegen das aktuelle Element nicht auch im übergeordneten Anzeigebereich 12 enthalten ist (= "-" in Figur 10), dann wird das mindestens eine übergeordnete Element zum aktuellen Element bestimmt (= Verfahrensschritt [A.6] in Figur 10) und das mindestens eine im Verfahrensschritt [A.6] bestimmte übergeordnete Element in den übergeordneten Anzeigebereich 12 aufgenommen (= Verfahrensschritt [A.7] in Figur 10), wenn denn dieses übergeordnete Element nicht bereits im übergeordneten Anzeigebereich 12 enthalten ist.

Im Anschluß daran wird das aktuelle Element als (rückwärts gesehen) nächstes anzuzeigendes Element in der ursprünglichen Liste definiert (= Verfahrensschritt [A.8] in Figur 10) und im Ablauf vor Verfahrensschritt [A.2] zurückgegangen. In Abhängigkeit vom Ergebnis des Überprüfungsvorgangs im Verfahrensschritt [A.2] wird bei einem positiven Ergebnis (= "+" in Figur 10) der Kreislauf [A.2] --> [A.3] -> [A.4] --> [A.5] bzw. [A.6] + [A.7] -> [A.8] --> [A.2] erneut in Gang gesetzt, wohingegen bei einem negativen Ergebnis (= "-" in Figur 10) des Überprüfungsvorgangs im Verfahrensschritt [A.2] die durch das Trennelement 20 voneinander getrennten oberen und unteren Anzeigebereiche 12, 16, nämlich der übergeordnete Anzeigebereich 12 und der untergeordnete Anzeigebereich 16 dargestellt werden.

Zum eigentlichen Darstellen der anzuzeigenden Elemente wird dann zunächst das aktuelle Element als erstes anzuzeigendes Element des übergeordneten Anzeigebereichs 12 bestimmt (= Verfahrensschritt [B.1] in Figur 11) und dargestellt (= Verfahrensschritt [B.2] in Figur 11). Daraufhin wird überprüft, ob ein weiteres anzuzeigendes Element des übergeordneten Anzeigebereichs 12 vorhanden ist (= Verfahrensschritt [B.3] in Figur 11); wenn dies nicht der Fall ist (= "-" in Figur 11), dann wird das Trennelement 20 dargestellt (= Verfahrensschritt [B.7] in Figur 11), und auch der untergeordnete Anzeigebereich 16 wird dann dargestellt (= Verfahrensschritt [B.8] in Figur 11).

Wenn hingegen im Verfahrensschritt [B.3] ein weiteres anzuzeigendes Element des übergeordneten Anzeigebereichs 12 vorhanden ist (= "+" in Figur 11), dann wird geprüft, ob das nachfolgende Element des übergeordneten Anzeigebereichs 12 dem nachfolgenden Element der ursprünglichen Liste entspricht (= Verfahrensschritt [B.4] in Figur 11):

Wenn das nachfolgende Element des übergeordneten Anzeigebereichs 12 nicht dem nachfolgenden Element der ursprünglichen Liste entspricht (= "-" in Figur 11), dann wird das Trennelement 20 dargestellt (= Verfahrensschritt [B.5] in Figur 11), ansonsten wird das aktuelle Element gleich als nächstes anzuzeigendes Element des übergeordneten Anzeigebereichs 12 definiert (= Verfahrensschritt [B.6] in Figur 11) und vor den Verfahrensschritt [B.2] zurückgegangen.

In Abhängigkeit vom Ergebnis des Überprüfungsvorgangs im Verfahrensschritt [B.3] wird bei einem positiven Ergebnis (= "+" in Figur 11) der Kreislauf [B.2] -> [B.3] -> [B.4] (-> [B.5]) -> [B.6] -> [B.2] erneut in Gang gesetzt, wohingegen bei einem negativen Ergebnis (= "-" in Figur 11) des Überprüfungsvorgangs im Verfahrensschritt [B.3] das Trennelement 20 dargestellt wird (= Verfahrensschritt [B.7] in Figur 11) sowie der untergeordnete Anzeigebereich 16 dargestellt wird (= Verfahrensschritt [B.8] in Figur 11).

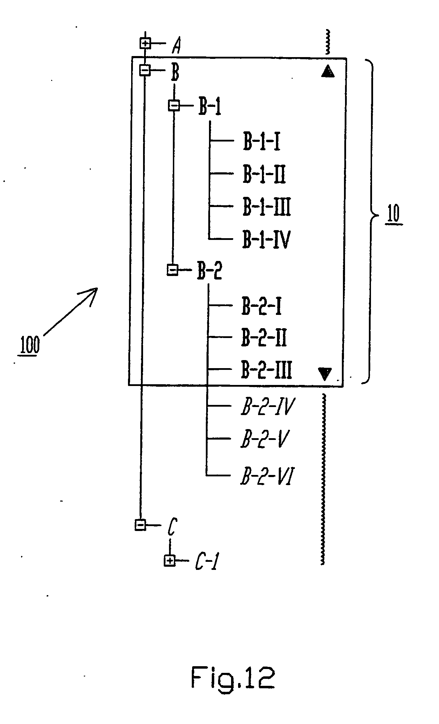

Im Hinblick auf die Darstellung verschiedener, hierarchisch strukturierter Listen lässt sich feststellen, dass die Aufteilung des Anzeigebereichs 10 dann eigentlich schon erfolgt ist, wenn die hierarchisch strukturierte Liste im Anzeigebereich 10 so positioniert ist, dass als erstes ein Element der höchsten Hierarchiestufe dargestellt wird; hierbei sind zu sämtlichen dargestellten Einträgen und Elementen von Unterlisten die jeweiligen übergeordneten Einträge und Elemente zu erkennen (vgl. Figur 12 = kein Ausführungsbeispiel gemäß der vorliegenden Erfindung, sondern ein das Verständnis der vorliegenden Erfindung erleichterndes Beispiel aus dem Stand der Technik).

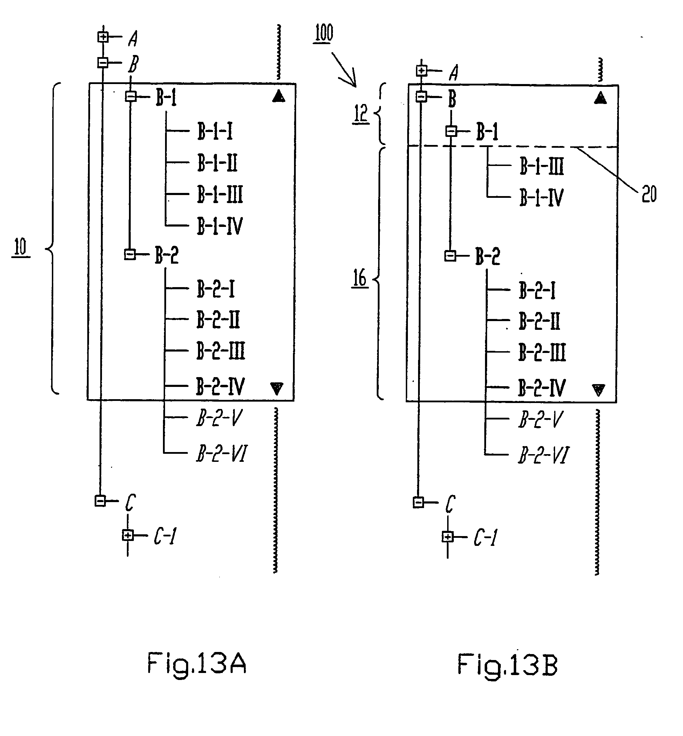

Beim "Blättern" in der hierarchisch strukturierten Liste nach unten (, das heißt die Einträge und Elemente werden von unten nach oben verschoben,) rutschen die übergeordneten Einträge und Elemente aus dem Anzeigebereich 10 (vgl. Figur 13A). In diesem Zusammenhang wird dem Nutzer gemäß den Figuren 9 bis 21B die Möglichkeit des "Blättems" durch jeweils einen ausgefüllten Pfeil am rechten Rand des Anzeigebereichs 10 signalisiert:

So bedeutet ein ausgefüllter Pfeil in der rechten oberen Ecke des Anzeigebereichs 10, dass - bei feststehender Anzeigeeinheit 100 - die dargestellte, hierarchisch strukturierte Liste "von oben nach unten" verschoben werden kann, so dass zuvor verborgene Einträge und

Elemente nunmehr im Anzeigebereich 10 sichtbar werden; in gleicher Weise bedeutet ein ausgefüllter Pfeil in der rechten unteren Ecke des Anzeigebereichs 10, dass - bei feststehender Anzeigeeinheit 100 - die dargestellte, hierarchisch strukturierte Liste "von unten nach oben" verschoben werden kann, so dass zuvor verborgene Einträge und Elemente nunmehr im Anzeigebereich 10 sichtbar werden.

Die Aufteilung in die beiden Anzeigebereiche 12, 16, das heißt in den übergeordneten Anzeigebereich 12 und in den untergeordneten Anzeigebereich 16 soll diesen Effekt des "Herausrutschens" der übergeordneten Einträge und Elemente aus dem Anzeigebereich 10 nun verhindern. Hierzu wird der übergeordnete Anzeigebereich 12 durch das Verschieben der Unterliste, das heißt durch das Verschieben im untergeordneten Anzeigebereich 16 insofern nicht berührt, als im übergeordneten Anzeigebereich 12 die übergeordneten Einträge und Elemente - und nur diese - gesammelt und entsprechend ihrer jeweiligen Hierarchiestufe dargestellt werden.

Für die zu verschiebende Unterliste steht ein eigener Anzeigebereich zur Verfügung, nämlich der untergeordnete Anzeigebereich 16, der - im Gegensatz zu herkömmlichen Darstellungen - lediglich um den Anzeigebereich 12 der übergeordneten Einträge und Elemente geschmälert wird. Demzufolge ergibt sich beim "Blättern" der hierarchisch strukturierten Liste um einen Eintrag bzw. um ein Element nach unten im Zuge der optimierten Darstellung der hierarchisch strukturierten Liste eine Konstellation gemäß Figur 13B: Für jedes Element der dargestellten Unterliste wird auch das zugehörige übergeordnete Element angezeigt.

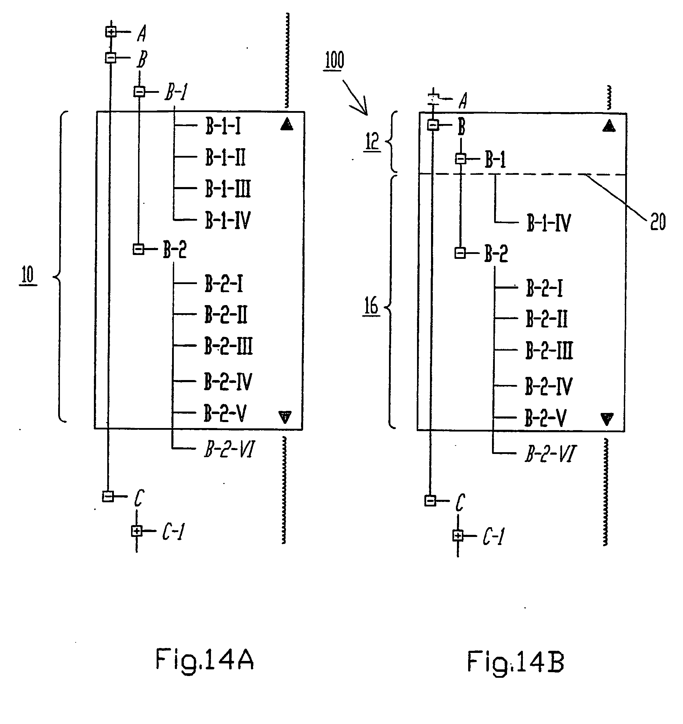

Beim zweiten "Blättern nach unten" (vgl. Figuren 14A und 14B) bleibt der Anzeigebereich 12 der übergeordneten Einträge und Elemente "wie gehabt", denn sämtliche dargestellten Einträge und Elemente der

Unterlisten sind diesen übergeordneten Einträgen und Elementen zugeordnet, so dass lediglich die Anzeige der Unterlisten, das heißt die Anzeige im untergeordneten Anzeigebereich 16 geändert wird.

Wiederum ist in diesem Zusammenhang gemäß Figur 14B (--> nach dem zweiten "Blättern nach unten") gewährleistet, dass für jeden Eintrag bzw. für jedes Element der dargestellten Unterliste jeweils auch der übergeordnete Eintrag bzw. das übergeordnete Element in der Anzeigeeinheit 100 angezeigt wird.

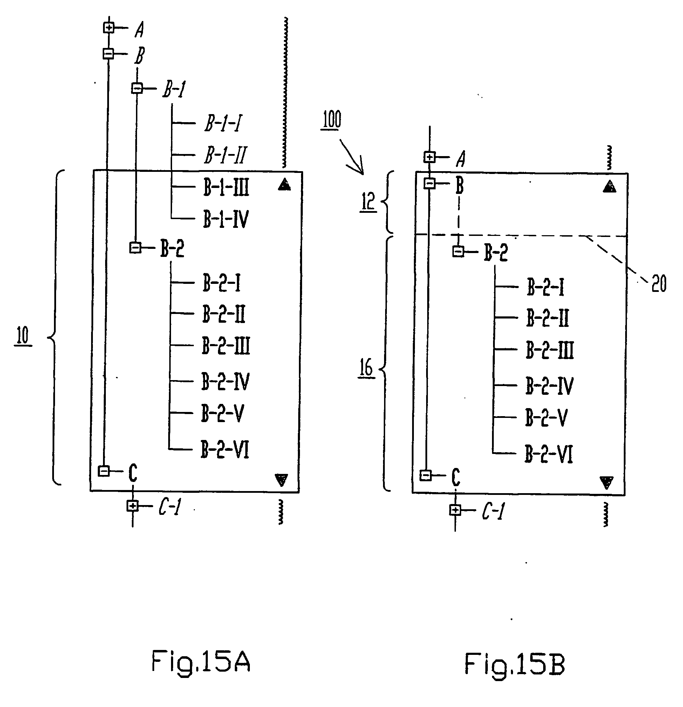

Mit dem nächsten, das heißt mit dem dritten "Blättern nach unten" (vgl. Figur 15A) kann die Unterliste (entsprechend der dritten oder unteren Hierarchiestufe) des Elements "B-1 (entsprechend der zweiten oder mittleren Hierarchiestufe) nicht mehr dargestellt werden; somit muss auch das zugehörige übergeordnete Element "B-1" (entsprechend der zweiten oder mittleren Hierarchiestufe) selbst nicht mehr angezeigt werden und wird aus dem oberen übergeordneten Anzeigebereich 12 entfernt (vgl. Figur 15B).

Das Element "B-2" (entsprechend der zweiten oder mittleren Hierarchiestufe) gehört aber weiterhin zur Unterliste des übergeordneten Elements "B" (entsprechend der ersten oder oberen Hierarchiestufe), so dass es weiterhin im Anzeigebereich 16 der Unterlisten die zugehörige Unterliste mit den Elementen "B-2-I", "B-2-II", "B-2-III", "B-2-IV", "B-2-V" und "B-2-VI" (entsprechend der dritten oder unteren Hierarchiestufe) anführt:

Somit sind für jedes Element "B-2-I", "B-2-II", "B-2-III", "B-2-IV", "B-2-V" und "B-2-VI" (entsprechend der dritten oder unteren Hierarchiestufe) der Unterliste die jeweiligen übergeordneten Elemente "B" (entsprechend der ersten oder oberen Hierarchiestufe) und "B-2" (entsprechend der zweiten oder mittleren Hierarchiestufe) zu erkennen.

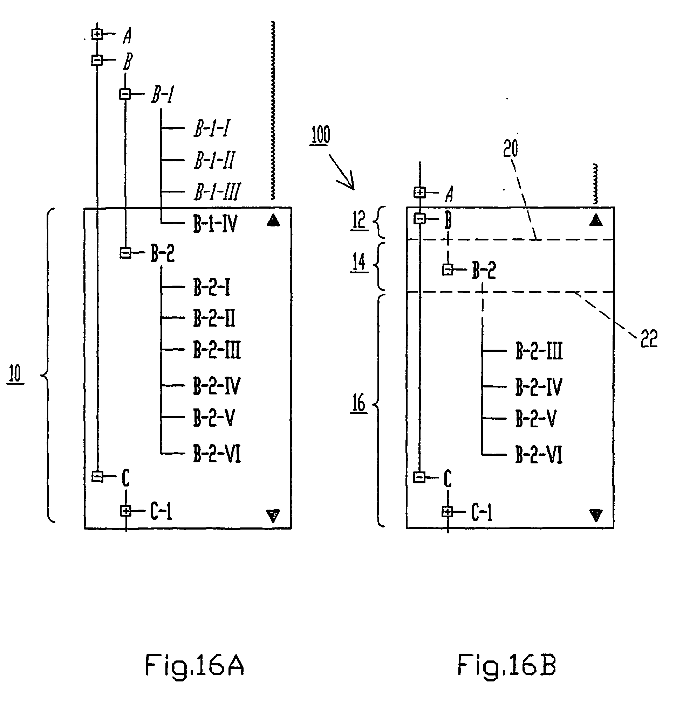

Beim nächsten, das heißt beim vierten "Blättern nach unten" (vgl. Figur 16A) ergibt sich insofern eine Besonderheit, als das Element "B-2" nicht zusammen mit seinem übergeordneten Element "B" im Anzeigebereich 12 der übergeordneten Elemente erscheinen darf, denn die Listenelemente "B-1-I", "B-1-II", "B-1-III" und "B-1-IV" vor diesem Listenelement sind nicht dargestellt. Somit muss das Element "B-2" in einem weiteren Anzeigebereich 14 übergeordneter Einträge und Elemente abgebildet werden, um die Zuordnung von Elementen der Unterliste zu gewährleisten (vgl. Figur 16B).

Zwischen diesem weiteren übergeordneten Anzeigebereich 14 und dem untergeordneten Anzeigebereich 16 ist ein weiteres Trennelement in Form einer weiteren Trennlinie 22 vorgesehen, so dass der weitere übergeordnete Anzeigebereich 14 von der ersten Trennlinie 20 und von der zweiten Trennlinie 22 gewissermaßen eingeschlossen ist (vgl. Figur 16B).

### Bezugszeichenliste

- 100: Anzeigeeinheit
- 10: gesamter Anzeigebereich
- 12: erster übergeordneter Anzeigebereich
- 14: zweiter übergeordneter Anzeigebereich
- 16: untergeordneter Anzeigebereich
- 20: erstes Trenn- und/oder Ausblendelement, insbesondere erste Trennlinie
- 22: zweites Trenn- und/oder Ausblendelement, insbesondere zweite Trennlinie
- 24: Trenn- und/oder Ausblendelement, insbesondere Unterbrechungspunkt
- 26: Trenn- und/oder Ausblendelement, insbesondere Unterbrechungslinie

## Patentansprüche

1. Computergestütztes Verfahren zum Darstellen mindestens einer hierarchisch strukturierten, zumindest zweistufigen Liste in einer Baumdarstellung, aufweisend
- mindestens eine Hierarchiestufe (A, B, C) übergeordneter Einträge oder Elemente und
- mindestens eine Hierarchiestufe (I, II, III) untergeordneter Einträge oder Elemente,
- wobei mindestens ein untergeordnetes Element jeweils einem übergeordneten Element zugeordnet wird, wobei bei einem Darstellen eines oder mehrerer der untergeordneten Elemente stets auch die dem untergeordneten Element jeweils zugeordneten übergeordneten Elemente dargestellt werden,
**dadurch gekennzeichnet, dass**
- ein zum Darstellen vorgesehener Anzeigebereich (10) der einen Baumdarstellung in mindestens einen übergeordneten Anzeigebereich (12, 14) und in mindestens einen untergeordneten Anzeigebereich (16) aufgeteilt wird, dass
-- im untergeordneten Anzeigebereich (16) die untergeordneten Elemente dargestellt werden und
-- im übergeordneten Anzeigebereich (12, 14) die den untergeordneten Elementen jeweils zugeordneten übergeordneten Elemente dargestellt werden, und
dass mindestens eine Trennlinie (20, 22) zwischen dem übergeordneten Anzeigebereich (12, 14) und dem untergeordneten Anzeigebereich (16) derart positioniert wird, dass im übergeordneten Anzeigebereich (12, 14) sämtliche oder nahezu sämtliche den untergeordneten Elementen zugeordneten übergeordneten Elemente dargestellt werden.

2. Verfahren gemäß Anspruch 1, **dadurch gekennzeichnet, dass** die untergeordneten Elemente zum Darstellen der jeweiligen zugeordneten übergeordneten Elemente zumindest partiell, insbesondere am Anfang des untergeordneten Anzeigebereichs (16), ausgeblendet werden.

3. Verfahren gemäß Anspruch 1 oder 2, **gekennzeichnet durch** die folgenden Verfahrensschritte:
[A] Ermitteln der anzuzeigenden Einträge oder Elemente; und
[B] Darstellen der anzuzeigenden Einträge oder Elemente.

4. Verfahren gemäß Anspruch 3, **dadurch gekennzeichnet, dass** der Verfahrensschritt [A] des Ermittelns der anzuzeigenden Einträge oder Elemente die folgenden einzelnen Schritte aufweist:
[A.1] Definieren des aktuellen Elements als letztes anzuzeigendes Element in der ursprünglichen Liste (= Originalliste); und
Gehen zu Schritt [A.2];
[A.2] Prüfen, ob sich weiteres Element in den untergeordneten Anzeigebereich (16) aufnehmen lässt:
- wenn sich weiteres Element in den untergeordneten Anzeigebereich (16) aufnehmen lässt (+),
dann Gehen zu Schritt [A.3];
- wenn sich kein weiteres Element in den untergeordneten Anzeigebereich (16) aufnehmen lässt (-),
dann Gehen zu Schritt [A.9];
[A.3] Aufnehmen des aktuellen Elements in den untergeordneten Anzeigebereich (16); und
Gehen zu Schritt [A.4];
[A.4] Prüfen, ob aktuelles Element auch im übergeordneten Anzeigebereich (12, 14) enthalten ist:
- wenn aktuelles Element auch im übergeordneten Anzeigebereich (12, 14) enthalten ist (+),
dann Gehen zu Schritt [A.5];
- wenn aktuelles Element nicht auch im übergeordneten Anzeigebereich (12, 14) enthalten ist (-),
dann Gehen zu Schritt [A.6];
[A.5] Löschen des aktuellen Elements aus dem übergeordneten Anzeigebereich (12, 14); und
Gehen zu Schritt [A.8];
[A.6] Bestimmen des mindestens einen übergeordneten Elements zum aktuellen Element; und
Gehen zu Schritt [A.7];
[A.7] Aufnehmen des mindestens einen im Schritt [A.6] bestimmten übergeordneten Elements in den übergeordneten Anzeigebereich (12, 14), falls dieses übergeordnete Element noch nicht im übergeordneten Anzeigebereich (12, 14) enthalten ist, wobei die Sortierung der übergeordneten Elemente in der Liste für den übergeordneten Anzeigebereich (12, 14) der Reihenfolge der ursprünglichen Liste (= Originalliste) entspricht; und
Gehen zu Schritt [A.8];
[A.8] Definieren des aktuellen Elements als rückwärts kommend nächstes anzuzeigendes Element in der ursprünglichen Liste (= Originalliste); und Gehen zu Schritt [A.2];
[A.9] Darstellen des übergeordneten Anzeigebereichs (12, 14) und des untergeordneten Anzeigebereichs (16).

5. Verfahren gemäß Anspruch 3 oder 4, **dadurch gekennzeichnet, dass** der Verfahrensschritt [B] des Darstellens der anzuzeigenden Einträge oder Elemente die folgenden einzelnen Schritte aufweist:
[B.1] Definieren des aktuellen Elements als erstes anzuzeigendes Element des übergeordneten Anzeigebereichs (12, 14); und
Gehen zu Schritt [B.2];
[B.2] Darstellen des aktuellen Elements; und
Gehen zu Schritt [B.3];
[B.3] Prüfen, ob weiteres anzuzeigendes Element des übergeordneten Anzeigebereichs (12, 14) vorhanden:
- wenn weiteres anzuzeigendes Element des übergeordneten Anzeigebereichs (12, 14) vorhanden (+),
dann Gehen zu Schritt [B.4];
- wenn kein weiteres anzuzeigendes Element des übergeordneten Anzeigebereichs (12, 14) vorhanden (-),
dann Gehen zu Schritt [B.7];
[B.4] Prüfen, ob nachfolgendes Element des übergeordneten Anzeigebereichs (12, 14) nachfolgendem Element der ursprünglichen Liste (= Originalliste) entspricht:
- wenn nachfolgendes Element des übergeordneten Anzeigebereichs (12, 14) nachfolgendem Element der ursprünglichen Liste (= Originalliste) entspricht (+),
dann Gehen zu Schritt [B.6];
- wenn nachfolgendes Element des übergeordneten Anzeigebereichs (12, 14) nicht nachfolgendem Element der ursprünglichen Liste (= Originalliste) entspricht (-),
dann Gehen zu Schritt [B.5];
[B.5] Darstellen der Trennlinie (20, 22); und
Gehen zu Schritt [B.6];
[B.6] Definieren des aktuellen Elements als nächstes anzuzeigendes Element des übergeordneten Anzeigebereichs (12, 14); und
Gehen zu Schritt [B.2];
[B.7] Darstellen der Trennlinie (20, 22); und
Gehen zu Schritt [B.8];
[B.8] Darstellen des untergeordneten Anzeigebereichs (16).

6. Anzeigeeinheit (100) zum Darstellen mindestens einer hierarchisch strukturierten, zumindest zweistufigen Liste in einer Baumdarstellung, aufweisend
- mindestens eine Hierarchiestufe (A, B, C) übergeordneter Einträge oder Elemente und
- mindestens eine Hierarchiestufe (I, II, III) untergeordneter Einträge oder Elemente,
- wobei mindestens ein untergeordnetes Element jeweils einem übergeordneten Element zugeordnet ist, wobei bei einem Darstellen eines oder mehrerer der untergeordneten Elemente stets auch die dem untergeordneten Element jeweils zugeordneten übergeordneten Elemente darstellbar sind,
- **dadurch gekennzeichnet, dass** der zum Darstellen vorgesehene gesamte Anzeigebereich (10) der einen Baumdarstellung in mindestens einen übergeordneten Anzeigebereich (12, 14) und in mindestens einen untergeordneten Anzeigebereich (16) aufgeteilt ist, dass
-- im untergeordneten Anzeigebereich (16) die untergeordneten Elemente darstellbar sind und
-- im übergeordneten Anzeigebereich (12, 14) die den untergeordneten Elementen jeweils zugeordneten übergeordneten Elemente darstellbar sind,
und
dass mindestens eine Trennlinie (20, 22) zwischen dem übergeordneten Anzeigebereich (12, 14) und dem untergeordneten Anzeigebereich (16) derart positioniert ist, dass im übergeordneten Anzeigebereich (12, 14) sämtliche den untergeordneten Elementen zugeordneten übergeordneten Elemente darstellbar sind.

7. Anzeigeeinheit gemäß Anspruch 6, **dadurch gekennzeichnet, dass** im übergeordneten Anzeigebereich (12, 14) zumindest ein Teil der den untergeordneten Elementen zugeordneten übergeordneten Elemente in einer kleineren Schrift(art) darstellbar ist.

8. Verwendung einer Anzeigeeinheit gemäß Anspruch 6 oder 7 in einem Mobiltelefon oder in einem Navigationssystem.

## Claims

1. Computer-aided method for the presentation of at least one hierarchically structured, at least two-level list in a tree presentation, having
- at least one hierarchy level (A, B, C) of superordinate entries or elements and
- at least one hierarchy level (I, II, III) of subordinate entries or elements,
- wherein at least one subordinate element is respectively assigned to a superordinate element, wherein presentation of one or more of the subordinate elements always also involves presentation of the superordinate elements respectively associated with the subordinate element,
**characterized in that**
- a display area (10), provided for presentation, from one tree presentation is split into at least one superordinate display area (12, 14) and into at least one subordinate display area (16), **in that**
- the subordinate display area (16) is used to present the subordinate elements and
- the superordinate display area (12, 14) is used to present the superordinate elements respectively associated with the subordinate elements, and
**in that** at least one dividing line (20,22) is positioned between the superordinate display area (12, 14) and the subordinate display area (16) such that the superordinate display area (12, 14) is used to present all or almost all the superordinate elements associated with the subordinate elements.

2. Method according to Claim 1, **characterized in that** the subordinate elements are hidden at least partially, particularly at the start of the subordinate display area (16), for the purpose of presenting the respective associated superordinate elements.

3. Method according to Claim 1 or 2, **characterized by** the following method steps:
[A] the entries or elements to be displayed are ascertained; and
[B] the entries or elements to be displayed are presented.

4. Method according to Claim 3, **characterized in that** method step [A] of ascertaining the entries or elements to be displayed has the following individual steps:
[A.1] the current element is defined as the last element to be displayed in the original list; and
go to step [A.2];
[A.2] a check is performed to determine whether a further element can be included in the subordinate display area (16):
- if a further element can be included in the subordinate display area (16) (+) then go to step [A.3];
- if a further element cannot be included in the subordinate display area (16) (-) then go to step [A.9];
[A.3] the current element is included in the subordinate display area (16); and
go to step [A.4];
[A.4] a check is performed to determine whether the current element is also contained in the superordinate display area (12, 14):
- if the current element is also contained in the superordinate display area (12, 14) (+) then go to step [A.5];
- if the current element is not also contained in the superordinate display area (12, 14) (-) then go to step [A.6];
[A.5] the current element is deleted from the superordinate display area (12, 14); and
go to step [A.8];
[A.6] the at least one superordinate element is determined for the current element; and
go to step [A.7];
[A.7] the at least one superordinate element determined in step [A.6] is included in the superordinate display area (12, 14) if this superordinate element is not yet contained in the superordinate display area (12, 14), wherein the sorting of the superordinate elements in the list for the superordinate display area (12, 14) corresponds to the order of the original list; and
go to step [A.8];
[A.8] the current element is defined as the next element to be displayed, coming backwards, in the original list; and
go to step [A.2];
[A.9] the superordinate display area (12, 14) and the subordinate display area (16) are presented.

5. Method according to Claim 3 or 4, **characterized in that** method step [B] of presenting the entries or elements to be displayed has the following individual steps:
[B.1] the current element is defined as the first element to be displayed from the superordinate display area (12, 14); and
go to step [B.2];
[B.2] the current element is presented; and
go to step [B.3];
[B.3] a check is performed to determine whether a further element to be displayed from the superordinate display area (12, 14) is present:
- if a further element to be displayed from the superordinate display area (12, 14) is present (+)
then go to step [B.4];
- if a further element to be displayed from the superordinate display area (12, 14) is not present (-)
then go to step [B.7];
[B.4] a check is performed to determine whether the subsequent element from the superordinate display area (12, 14) corresponds to the subsequent element from the original list:
- if the subsequent element from the superordinate display area (12, 14) corresponds to the subsequent element from the original list (+) then go to step [B.6];
- if the subsequent element from the superordinate display area (12, 14) does not correspond to the subsequent element from the original list (-) then go to step [B.5];
[B.5] the dividing line (20, 22) is presented; and
go to step [B.6];
[B.6] the current element is defined as the next element to be displayed from the superordinate display area (12, 14); and
go to step [B.2];
[B.7] the dividing line (20, 22) is presented; and
go to step [B.8];
[B.8] the subordinate display area (16) is presented.

6. Display unit (100) for the presentation of at least one hierarchically structured, at least two-level list in a tree presentation, having
- at least one hierarchy level (A, B, C) of superordinate entries or elements and
- at least one hierarchy level (I, II, III) of subordinate entries or elements,
- wherein at least one subordinate element is respectively associated with a superordinate element, wherein presentation of one or more of the subordinate elements always also involves the possibility of presentation of the superordinate elements respectively associated with the subordinate element,
- **characterized in that** the entire display area (10), provided for presentation, from one tree presentation is split into at least one superordinate display area (12, 14) and into at least one subordinate display area (16), **in that**
- the subordinate display area (16) can be used to present the subordinate elements and
- the superordinate display area (12, 14) can be used to present the superordinate elements respectively associated with the subordinate elements, and
**in that** at least one dividing line (20, 22) is positioned between the superordinate display area (12, 14) and the subordinate display area (16) such that the superordinate display area (12, 14) can be used to present all the superordinate elements associated with the subordinate elements.

7. Display unit according to Claim 6, **characterized in that** the superordinate display area (12, 14) can be used to present at least some of the superordinate elements associated with the subordinate elements in a smaller type(face).

8. Use of a display unit according to Claim 6 or 7 in a mobile telephone or in a navigation system.

## Revendications

1. Procédé assisté par ordinateur pour représenter dans une arborescence au moins une liste structurée hiérarchiquement comprenant au moins deux niveaux, présentant
- des entrées ou éléments se trouvant au-dessus d'au moins un niveau hiérarchique (A, B, C) et
- des entrées ou éléments se trouvant au-dessous d'au moins un niveau hiérarchique (I, II, III),
- au moins un élément de niveau inférieur étant à chaque fois associé à un élément de niveau supérieur, les éléments de niveau supérieur respectivement associés à l'élément de niveau inférieur étant toujours également représentés lors d'une représentation d'un ou de plusieurs des éléments de niveau inférieur, **caractérisé en ce que**
- une zone d'affichage (10) prévue pour la représentation de l'arborescence est divisée en au moins une zone d'affichage de niveau supérieur (12, 14) et en au moins une zone d'affichage de niveau inférieur (16), **en ce que**
- les éléments de niveau inférieur sont représentés dans la zone d'affichage de niveau inférieur (16) et
- les éléments de niveau supérieur respectivement associés aux éléments de niveau inférieur sont représentés dans la zone d'affichage de niveau supérieur (12, 14), et
**en ce qu'**au moins une ligne de séparation (20, 22) est positionnée entre la zone d'affichage de niveau supérieur (12, 14) et la zone d'affichage de niveau inférieur (16) de telle sorte que la totalité ou la quasi-totalité des éléments de niveau supérieur associés aux éléments de niveau inférieur sont représentés dans la zone d'affichage de niveau supérieur (12, 14).

2. Procédé selon la revendication 1, **caractérisé en ce que** les éléments de niveau inférieur, pour la représentation des éléments de niveau supérieur respectivement associés, sont masqués au moins partiellement, notamment au début de la zone d'affichage de niveau inférieur (16).

3. Procédé selon la revendication 1 ou 2, **caractérisé par** les étapes suivantes :
[A] Détermination des entrées ou éléments à afficher ; et
[B] Représentation des entrées ou éléments à afficher.

4. Procédé selon la revendication 3, **caractérisé en ce que** l'étape de procédé [A] de détermination des entrées ou éléments à afficher présente les étapes individuelles ci-après :
[A.1] Définition de l'élément actuel en tant que dernier élément à afficher dans la liste originelle (= liste originale) ; et
aller à l'étape [A.2] ;
[A.2] Contrôle pour savoir si un élément supplémentaire peut être accueilli dans la zone d'affichage de niveau inférieur (16) :
- si un élément supplémentaire peut être accueilli dans la zone d'affichage de niveau inférieur (16) (+),
alors aller à l'étape [A.3] ;
- si aucun élément supplémentaire ne peut être accueilli dans la zone d'affichage de niveau inférieur (16) (-),
alors aller à l'étape [A.9] ;
[A.3] Accueil de l'élément actuel dans la zone d'affichage de niveau inférieur (16) ; et
aller à l'étape [A.4] ;
[A.4] Contrôle pour savoir si l'élément actuel se trouve également dans la zone d'affichage de niveau supérieur (12, 14) :
- si l'élément actuel se trouve également dans la zone d'affichage de niveau supérieur (12, 14) (+), alors aller à l'étape [A.5] ;
- si l'élément actuel ne se trouve pas également dans la zone d'affichage de niveau supérieur (12, 14) (-) ,
alors aller à l'étape [A.6] ;
[A.5] Effacement de l'élément actuel de la zone d'affichage de niveau supérieur (12, 14) ; et
aller à l'étape [A.8] ;
[A.6] Détermination de l'au moins un élément de niveau supérieur associé à l'élément actuel ; et
aller à l'étape [A.7] ;
[A.7] Accueil dans la zone d'affichage de niveau supérieur (12, 14) de l'au moins un élément de niveau supérieur déterminé à l'étape [A.6] si cet élément de niveau supérieur ne se trouve pas encore dans la zone d'affichage de niveau supérieur (12, 14), le tri des éléments de niveau supérieur dans la liste pour la zone d'affichage de niveau supérieur (12, 14) correspondant à l'ordre de la liste originelle (= liste originale) ; et
aller à l'étape [A.8] ;
[A.8] Définition de l'élément actuel comme prochain élément à afficher rétrospectivement dans la liste originelle (= liste originale) ; et
aller à l'étape [A.2] ;
[A.9] Représentation de la zone d'affichage de niveau supérieur (12, 14) et de la zone d'affichage de niveau inférieur (16).

5. Procédé selon la revendication 3 ou 4, **caractérisé en ce que** l'étape de procédé [B] de représentation des entrées ou éléments à afficher présente les étapes individuelles ci-après :
[B.1] Définition de l'élément actuel en tant que premier élément à afficher de la zone d'affichage de niveau supérieur (12, 14) ; et
aller à l'étape [B.2] ;
[B.2] Représentation de l'élément actuel ; et
aller à l'étape [B.3]
[B.3] Contrôle pour savoir s'il existe un élément supplémentaire à afficher de la zone d'affichage de niveau supérieur (12, 14) :
- s'il existe un élément supplémentaire à afficher de la zone d'affichage de niveau supérieur (12, 14) (+),
alors aller à l'étape [B.4] ;
- s'il n'existe pas d'élément supplémentaire à afficher de la zone d'affichage de niveau supérieur (12, 14) (-),
alors aller à l'étape [B.7] ;
[B.4] Contrôle pour savoir si l'élément suivant de la zone d'affichage de niveau supérieur (12, 14) correspond à l'élément suivant de la liste originelle (= liste originale) :
- si l'élément suivant de la zone d'affichage de niveau supérieur (12, 14) correspond à l'élément suivant de la liste originelle (= liste originale) (+), alors aller à l'étape [B.6] ;
- si l'élément suivant de la zone d'affichage de niveau supérieur (12, 14) ne correspond pas à l'élément suivant de la liste originelle (= liste originale) (-), alors aller à l'étape [B.5] ;
[B.5] Représentation de la ligne de séparation (20, 22) ; et
aller à l'étape [B.6] ;
[B.6] Définition de l'élément actuel comme prochain élément à afficher de la zone d'affichage de niveau supérieur (12, 14) ; et
aller à l'étape [B.2] ;
[B.7] Représentation de la ligne de séparation (20, 22) ; et
aller à l'étape [B.8] ;
[B.8] Représentation de la zone d'affichage de niveau inférieur (16).

6. Unité d'affichage (100) pour représenter dans une arborescence au moins une liste structurée hiérarchiquement comprenant au moins deux niveaux, présentant
- des entrées ou éléments se trouvant au-dessus d'au moins un niveau hiérarchique (A, B, C) et
- des entrées ou éléments se trouvant au-dessous d'au moins un niveau hiérarchique (I, II, III),
- au moins un élément de niveau inférieur étant à chaque fois associé à un élément de niveau supérieur, les éléments de niveau supérieur respectivement associés à l'élément de niveau inférieur pouvant toujours également être représentés lors d'une représentation d'un ou de plusieurs des éléments de niveau inférieur,
**caractérisé en ce que** l'ensemble de la zone d'affichage (10) prévue pour la représentation de l'arborescence est divisée en au moins une zone d'affichage de niveau supérieur (12, 14) et en au moins une zone d'affichage de niveau inférieur (16), **en ce que**
- les éléments de niveau inférieur peuvent être représentés dans la zone d'affichage de niveau inférieur (16) et
- les éléments de niveau supérieur respectivement associés aux éléments de niveau inférieur peuvent être représentés dans la zone d'affichage de niveau supérieur (12, 14), et
**en ce qu'**au moins une ligne de séparation (20, 22) est positionnée entre la zone d'affichage de niveau supérieur (12, 14) et la zone d'affichage de niveau inférieur (16) de telle sorte que la totalité des éléments de niveau supérieur associés aux éléments de niveau inférieur peuvent être représentés dans la zone d'affichage de niveau supérieur (12 14).

7. Unité d'affichage selon la revendication 6, **caractérisée en ce qu'**au moins une partie des éléments de niveau supérieur associés aux éléments de niveau inférieur peuvent être représentés dans la zone d'affichage de niveau supérieur (12, 14) dans une écriture et/ou police plus petite.

8. Utilisation d'une unité d'affichage selon la revendication 6 ou 7 dans un téléphone mobile ou un système de navigation.
